# EUROPEAN PATENT APPLICATION

(11) **EP 2 027 987 A1**
(43) Date of publication of application: **25.02.2009**
(21) Application number: 07114702.9
(22) Date of filing: 21.08.2007
(51) Int. Cl.: B29C 51/10, B29C 51/30, B29C 33/38, B44C 1/17, B29C 51/14, B29C 35/08, B29C 47/06

(54) **Method of thermoforming a printed sheet having an adhesive layer**

(71) Applicant: 3M Innovative Properties Company, St. Paul MN 55144-1000 (US)
(72) Inventor: Muller, Carlo, 1831 Diegem (BE); Scott, Martin, 1831 Diegem (BE); Moguet, Fabrice, 1831 Diegem (BE); Lando, Matteo, 1831 Diegem (BE)
(74) Representative: Voortmans, Gilbert J.L.

(57) **Abstract**

There is provided a method of forming an article comprising:
(a) printing an ink composition on at least one major surface of a thermoformable polymeric sheet;
(b) applying a thermoformable adhesive layer on at least one major surface to the thermoformable polymeric sheet thereby obtaining a printed sheet having a thermoformable adhesive layer; and
(c) thermoforming the printed sheet having said thermoformable adhesive layer.

## Description

The present invention relates to a method of forming an article that comprises an adhesive layer. In particular, the present invention relates to a method of thermoforming to produce the article. The article is typically a decorative article for example for use on a vehicle, in particular a motor vehicle such as a motorbike or car.

Vehicles and in particular motorbikes include various plastic parts that desirably contain a particular decorative look or design. For example, the parts of the vehicle that may carry such a decorative plastic part include fuel tank covers, side mirror covers, pillars and window supports. Typically, these designs change from one season to another and hence the number of vehicles with such plastic decorative designs in a season and particular series are limited. Furthermore, typically these parts are exposed to the exterior and thus exposed to varying weather conditions such as temperature fluctuations, sun shine, humidity, rain, snow etc... The exposure to varying weather conditions impose very stringent requirements on the durability of the plastic part and the decorative designs applied thereon.

Decorative parts are also used in interior applications such as in the interior of vehicles such as cars, trucks, busses, trailers etc... For example, decorative parts may be used on interior door handles, door panels, dashboards etc... The parts are mounted in the interior of the vehicle in a variety of ways including clipping, screwing or adhering by means of an adhesive such as for example an adhesive tape or sprayed on adhesive. Frequently, it will also be required that a sound insulating or vibration dampening layer be included.

Similarly as decorative parts used in interior applications, it may be required that certain decorative parts of vehicles that are exposed to the exterior be provided with a functional layer such as a heat insulating layer or a sound insulating layer or a vibration dampening layer. For example, decorative parts of a motorbike close to the engine may need to be provided with a heat and/or sound insulating layer. Accordingly, the non-visible part (or backside) of such a decorative part may need to have a heat and/or sound insulating layer.

Decorative plastic parts of a vehicle have so far been produced by injection molding methods. A typically used injection molding method is known as in-mold decoration (IMD). See for example American Patent Nos. 4,059,471; 4,650,533; 4,356,230 and 4,202,663. IMD combines the process of forming an article by injection molding with decoration of the article. In this method, a plastics carrier sheet, bearing a printed image, is placed in the cavity of an injection molding tool. Molten thermoplastic resin is then injected into the cavity to contact the carrier sheet. With suitable design of the injection molding tool, the pre-printed plastics carrier sheet becomes integral to the molded article or part. This is contrasted with the process described, for example, in European Patent application No. 799,681, where an image is transferred onto an article during the injection molding process. The molding process therein disclosed is a reaction injection molding, whereby reactive polymer components are injected into a mold at a relatively low temperature. The reactive components are mixed by injection and undergo a reaction, which raises the temperature of the mixture in the mold and produces hardened, cross-linked polymers.

The injection molding technique allows obtaining good results in terms of quality and precision also in case of decoration of articles having a complex shape. However, it has the disadvantage that it is very difficult and expensive to make modifications to the molds or any personalization to the printing process. Thus, although durable parts can be produced with this method, the method has the disadvantage that it is expensive because of the investment in one or more molding tools used in injection molding. This is particularly so when only a limited amount of parts are to be produced, for example for a limited series.

Further, for mounting the injection molded parts using an adhesive, whether in an interior or exterior application, require a separate application step for applying an adhesive layer thereto, which is inconvenient, costly and in particular with more complex shape may be difficult. Similarly, when a functional layer is required such as a heat insulating layer or sound insulating layer, separate application steps will be required.

WO 2004/067599 discloses radiation curable inks for use in in-mold-decoration and in-mold-coating processes. This PCT application also discloses the use of radiation curable inks for use in thermoforming processes.

It would now be desirable to find a method of forming articles, in particular decorative articles in a more cost effective way while still meeting the requirements imposed on such parts, particular when exposed to varying weather conditions. It would in particular be desirable to find a method that allows producing in a cost effective way even a very limited number of articles. It would furthermore be desirable to produce decorative articles that can be conveniently and firmly attached to a substrate, for example for application in the exterior or interior part of a vehicle. Still further it would be desirable to produce in a cost effective way decorative articles that include a functional layer such as a heat and/or sound insulating layer or a vibration dampening layer.

According to one aspect of the present invention there is provided a method of forming an article comprising:
(a) printing an ink composition on at least one major surface of a thermoformable polymeric sheet;
(b) applying a thermoformable adhesive layer on at least one major surface to the thermoformable polymeric sheet thereby obtaining a printed sheet having a thermoformable adhesive layer;
(c) thermoforming the printed sheet having said thermoformable adhesive layer.

The method of the present invention provides a cost effective and convenient way to produce thermoformed decorative articles that are provided with an adhesive layer. Accordingly, they can be attached to a part of for example a vehicle to be decorated through the adhesive layer. Further, the method offers the advantage that the adhesive layer can be uniformly applied over the decorative article even in cases of more complex three dimensional shapes. Hence a firm adhesion between the decorative part and the part to be decorated can be achieved in an easy and cost effective way. This is particularly important in the decoration of vehicle parts that are often prone to vibration and shock. Typically, such parts nowadays require the use of mechanical fasteners such as screws and the like to firmly and securely attach them to the vehicle.

Still further, the adhesive layer allows for the attachment of a functional layer such as a heat insulating layer, sound insulating layer or vibration dampening layer. Further, in a particular aspect of the present invention, such functional layer may be attached to the adhesive layer before thermoforming the printed sheet. This allows for an easy, convenient and cost effective production of decorative parts that also include a functional layer.

The method allows producing decorative parts for a vehicle, in particular motor vehicle, in an inexpensive way. In particular, the method even allows producing highly customized parts upto the individual level at an affordable cost.

In a particular aspect, the thermoforming step comprises
i) providing a mold having a desired shape and size to form an article of a desired shape and size;
(ii) heating the printed sheet;
(iii) pressing the mold against the printed sheet and applying vacuum thereto to allow the printed sheet to wrap around the mold; and
(iv) optionally removing the printed sheet from the mold.

As a mold for use in the method, one may use a part to be decorated as the mold. For example, when decorating a side mirror of a vehicle, the injection molded housing of the mirror can be used as the mold in the thermoforming method. Alternatively, a mold can be produced by Computerized Numerically Controlled milling techniques from a suitable material such as a resin or aluminum using CAD data describing the 3D-geometry of the desired part.

The method is also capable of producing complex designs that are durable even when exposed to variable weather conditions to which the vehicle bearing the part may be exposed. For example, the designs typically are well protected against scratching and wearing, typically have good light fastness, resistance to heat and humidity.

The method of the present invention is particularly suitable for decorating parts of a motor vehicle such as a motorbike, car, truck or bus. Examples of parts of a vehicle that may be decorated include side mirrors, fuel tanks, pillars, window supports and stone chip resistant claddings.

In a further aspect, the present invention provides thermoformed articles obtainable by the method described above.

For example, in a particular embodiment of the invention, a thermoformed article is provided having a printed ink composition and an adhesive layer having a structured surface comprising microchannels defining between them raised areas. Thermoformed articles having an adhesive layer with a structured surface allow an easier and convenient application, in particular when the thermoformed sheet is thin. In such a case, the entrapment of air may cause a less than optimal adherence of the article to a part to be decorated or it may cause disturbance of the design of the article, in particular when the sheet is transparent or translucent.

The steps of the method may be performed in the sequence described above, i.e. the thermoformable polymeric sheet may be printed first and then the adhesive layer may be applied followed by thermoforming. However, it is also contemplated to first apply the adhesive layer and then print on the polymeric sheet. For example, in one embodiment, the ink composition is printed on one major side of the polymeric sheet and then the thermoformable adhesive layer is applied on top or over the printed ink composition or coating. In another embodiment, the adhesive layer may be applied to the major side of the polymeric sheet opposite to the major side that has the printed ink composition. In the latter embodiment, it will be appreciated that the adhesive layer can also be provided first on one side of the polymeric sheet followed by printing of the ink on the opposite side. It is further contemplated to apply a thermoformable adhesive layer on both major sides of the polymeric sheeting. Also, when printing is carried out on both sides of the polymeric sheet, the thermoformable adhesive layer may be applied on one or both printed sides of the polymeric sheet.

The adhesive layer for use in the method of the present invention is a thermoformable adhesive. An adhesive layer is considered to be thermoformable within the scope of the present application if the adhesive layer is capable of being co-formed with the polymeric sheet in the forming step. This typically requires that the adhesive layer has a softening point similar to or below the softening point of the thermoformable polymeric sheet. It will further generally be preferred that the adhesive layer does not become too soft or liquid which could cause undesirable flow of the adhesive during the thermoforming step. Generally, the adhesive layer should also retain its function or capability to adhere the polymeric sheet to another substrate following thermoforming. This is however not a requirement in case the adhesive layer is a heat activatable adhesive layer and the substrate or layer to which the adhesive layer is to adhere is co-formed with the adhesive layer and polymeric sheet in the thermoforming step. In this case, advantage can be taken of the heat in the thermoforming step to simultaneously activate the adhesive during thermoforming thereby adhering the adhesive layer to the co-formed substrate or layer.

Suitable thermoformable adhesives include pressure sensitive adhesives as well as heat activatable adhesives. Heat activatable adhesives include adhesives that are essentially non-tacky at ambient temperature and that become tacky at elevated temperatures. A heat activatable adhesive layer may however also be tacky at ambient temperature but reach its full adhesive characteristics at elevated temperature such that the desired bond strength is obtained by activating the adhesive at elevated temperature, bonding the desired substrate thereto and then cooling the substrate. Heat activatable adhesive layers also include adhesives that upon activation cross-link. As mentioned above, the heat activatable adhesive layer may be used to bond to a desired layer or substrate simultaneously in the thermoforming step. In such a case, the temperature needed to activate the adhesive should be similar to the temperature used in the thermoforming step to form the printed polymeric sheet. Alternatively, if it is desired that the heat activatable adhesive be used to adhere to a substrate following the thermoforming step, it will generally be preferred that the temperature required to activate the adhesive be higher then the temperature used during the thermoforming step such that the adhesive is not activated during the thermoforming. This is particularly so if the heat activatable adhesive layer is a cross-linking adhesive. In case the heat activatable layer is of the type that becomes tacky or increases tackiness upon heating, the activation temperature may coincide with the temperature of thermoforming.

Generally, the adhesive layer will be protected with a thermoformable release liner, in particular when the adhesive layer is a pressure sensitive adhesive or an adhesive that becomes tacky during the thermoforming step. Suitable thermoformable release liners include polymeric films provided with a release coating. Particularly useful thermoformable release liners include polyolefin films such as polyethylene or polypropylene films that may be coated with a release coating such as for example a silicone release coating. It will generally also be preferred that the polyethylene or polypropylene film has a crystalline melting point below the softening point of the thermoformable polymeric sheet.

Suitable heat activatable adhesives include so-called hot melt adhesives that are heated to melt or soften thereby establishing the desired adhesion upon cooling as well as crosslinking adhesives. Heat activatable adhesive include also those that may additionally have pressure sensitive adhesive characteristics. Suitable heat activatable adhesive include epoxy based adhesives as well as hot melt adhesives based on polymers selected from poly (ethyl vinyl acetate), polyamides, polyolefins, polyvinyl ethers, polyvinyl esters and thermoplastic polyurethanes. As desired or needed, the hot melt adhesives may include one or more tackifying resins.

Suitable pressure sensitive adhesives for use with this invention may comply with any of the following characterizations or definitions as used in the art for identifying pressure sensitive adhesives.

One well known means of identifying pressure sensitive adhesives is the Dahlquist criterion. This criterion defines a pressure sensitive adhesive as an adhesive having a 1 second creep compliance of greater than 1 10⁻⁶ cm²/dyne as described in "Handbook of Pressure Sensitive Adhesive Technology", Donatas Satas (Ed.), 2nd Edition, p. 172, Van Nostrand Reinhold, New York, N.Y., 1989, incorporated herein by reference. Alternatively, since modulus is, to a first approximation, the inverse of creep compliance, pressure sensitive adhesives may be defined as adhesives having a Young's modulus of less than 1 10⁶ dynes/cm².

Another well known means of identifying a pressure sensitive adhesive is that it is aggressively and permanently tacky at room temperature and firmly adheres to a variety of dissimilar surfaces upon mere contact without the need of more than finger or hand pressure as described in "Glossary of Terms Used in the Pressure Sensitive Tape Industry" provided by the Pressure Sensitive Tape Council, August, 1985, incorporated herein by reference.

Another suitable definition of a suitable pressure sensitive adhesive is that it preferably has a room temperature storage modulus within the area defined by the following points as plotted on a graph of modulus versus frequency at 25 °C.: a range of moduli from approximately 2 10⁵ to 4 10⁵ dynes/cm² at a frequency of approximately 0.1 radians/sec (0.017 Hz), and a range of moduli from approximately 2 10⁶ to 8 10⁶ dynes/cm² at a frequency of approximately 100 radians/sec (17 Hz) (for example see FIGS. 8-16 on p. 173 of Donatas Satas, "Handbook of Pressure Sensitive Adhesive Technology", 2nd Edition, Van Nostrand Rheinhold, New York (1989).

The pressure sensitive adhesive used in connection with the present invention is preferably an acrylic based pressure sensitive adhesive but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D.Satas, Ed. Satas and Associates, Warwick RI/USA, 1989 on pages 550-556 and 423-442 respectively.

Particular examples of suitable pressure sensitive adhesives include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylenepropylene-diene polymers, and styrene-butadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

Adhesives that may be used to bond to substrates having a low surface energy, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precursor composition comprising one or more alkyl esters of acrylic or methacrylic acid, one or more copolymerizable monomers that have a Lewis base functionality and optionally one or more cross-linkers and (ii) one or more tackifying resins.

Still further pressure sensitive adhesive that may be particularly useful are disclosed in WO 95/13331. The pressure sensitive adhesive disclosed in WO 95/13331 comprises the polymerization product of:
(a) 25-97 parts by weight of an acrylic acid ester of a monohydric alcohol whose homopolymer has a T_{g} of less than 0°C;
(b) 3-75 parts by weight of a non-polar ethylenically unsaturated monomer whose homopolymer has a solubility parameter of no greater than 10.50 and a Tg greater than 15°C; and
(c) 0-5 parts by weight of a polar ethylenically unsaturated monomer whose homopolymer has a solubility parameter of no greater than 10.50 and a Tg greater than 15°C.

Examples of suitable polar and non-polar monomers are as described in said PCT application.

The adhesive layer may be applied in a continuous or discontinuous way and may be applied by a variety of application methods including spraying, coating, laminating and printing. In a particular embodiment, the adhesive layer may be applied by printing the adhesive composition. This is particularly useful for obtaining a discontinuous adhesive layer or adhesive layer that is applied in a particular pattern. For example, the adhesive layer may be applied, e.g. by printing, in a pattern of stripes, bands or discrete spots.

The adhesive layer may be applied at any thickness as desired for the particular purpose of application. Typically, the adhesive layer is applied in a thickness of 10 microns to 3 mm, for example 20 microns to 100 microns or 0.5 mm to 2 mm. The adhesive layer may be applied directly on the surface of the polymeric sheet or on the printed ink coating. However, to increase the adhesion of the adhesive layer to the underlying surface, one or more primer layers may be provided. Alternatively, to increase the adhesiveness, a corona treatment may be carried out on the surface that is to receive the adhesive layer.

In a particular embodiment of the present invention, a further layer, for example a functional layer may be applied to the thermoformable adhesive layer such that the whole laminate of printed sheet, adhesive layer and further layer is thermoformed. Such a further layer conveniently is thermoformable, i.e. be capable of being co-formed with the polymeric sheet and should thus typically have a softening point similar to or below the softening point of the thermoformable polymeric sheet. It may however also be possible to co-form a functional layer having suitable elasticity characteristics. Generally, the functional layer should retain essentially its desired functionality following thermoforming. Examples of functional layers that may be used with this invention include heat insulating layers, sound insulating layers and vibration dampening layers.

In a particular embodiment in accordance with the present invention, the further layer is a polymeric foam layer or woven or non-woven fibrous layer. Such layers may for example be used as heat insulating layers, sound insulating layers or vibration dampening layers.

Examples of polymeric foam layers include in particular acrylic foams. In one embodiment, the acrylic foam may have adhesive characteristics, i.e. be self-sticking. Accordingly, in this embodiment, the adhesive layer and functional layer may be integrated into one single layer. In another embodiment the foam is provided with an adhesive layer adhering it to the thermoformable substrate and may optionally carry a further adhesive layer on the opposite side so as to allow the formed article with the foam layer to be adhered to another substrate.

Acrylic foams for use in this invention include those based on polymers of an alkyl ester of acrylic or methacrylic acid (hereinafter referred to as "acrylic polymer"). Preferably, the acrylic polymer is a polymer of 50 to 100 parts by weight of substituted or unsubstituted alkyl acrylate or alkyl methacrylate monomers whose homopolymers exhibit a glass transition temperature of 0°C or less (collectively referred to hereinafter as "acrylate monomer") and 0 to 50 parts by weight of copolymerizable reinforcing monoethylenically unsaturated monomer, whose homopolymer preferably exhibits a glass transition temperature of 10°C or greater. Examples of this type of polymer are disclosed in US Pat. No. Re. 24,906 (Ulrich) and include copolymers of 88-99 parts by weight of alkyl acrylate having an average of 4-12 carbon atoms (herein referred to as "C₄₋₁₂") in the alkyl groups and 12 to 1 parts by weight of at least one of acrylic acid, methacrylic acid, itaconic acid, acrylamide and methacrylamide. Other useful reinforcing monoethylenically-unsaturated monomers which are copolymerizable with acrylate monomer include N-substituted acrylamides, acrylonitrile, methacrylonitrile, hydroxyalkyl acrylates, cyanoethyl acrylate, maleic anhydride, and N-vinyl-2-pyrrolidone, all of which result in pressure-sensitive adhesives which are tacky at ordinary room temperature when used with C₄₋₁₂alkyl acrylate in amounts up to about 12 mol percent of the acrylate monomer, or up to about 50 mol percent when the copolymerizable monomer is mainly N-vinylpyrrolidone. Other copolymerizable monomers that can be useful include alkyl vinyl ethers, vinylidene chloride, styrene, and vinyltoluene.

The acrylic foam used in the invention need not be tacky and accordingly the alkyl acrylate may have an average of only 1-3 carbon atoms, and the acrylic acid and other copolymerizable monomers may be used at far larger proportions. If such an acrylic foam is used in this invention, it is laminated to or coated with a relatively thin pressure-sensitive adhesive layer to provide a pressure sensitive adhesive layer assembly. Preferably, such a thin pressure sensitive adhesive layer comprises an acrylic polymer such as for example a polymer as described in US. Pat. No. Re. 24,906. The thin pressure sensitive adhesive layer may be provided on one major side of the acrylic foam layer but is preferably provided on both major sides of the acrylic foam layer.

The foam layers including acrylic foam layers, preferably have a thickness between 150 microns and 2000 microns and more preferably between 200 microns and 1500 microns.

The foam layer, including an acrylic foam layer, preferably has a density between 0.70 and 0.95. This density is achieved by including voids or cells. Typically, the foam layer will comprise at least 5% of voids and preferably between 20 and 30 % of voids on a volume basis.

The voids or cells in the foam layer can be created in any of the known manners described in the art and include the use of a gas or blowing agent and/or including hollow particles into the composition for the foam layer. For example, according to one method to create an acrylic foam described in US 4,415,615, the acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

If the viscosity of a mixture of polymerizable monomers is too low to provide a coatable froth, the monomers may be partially polymerized prior to frothing to provide a composition having a viscosity in the range of about 1000 to 40,000 cps, conveniently by mixing a photoactive polymerization initiator with the monomers and exposing the mixture to ultraviolet radiation. Viscosities above 5000 cps tend to provide better cell uniformity, whereas viscosities below 15,000 cps are preferred for ease of handling. Instead of employing ultraviolet radiation, a heat-activatable polymerization initiator may be mixed with the monomers to provide a mixture which can be partially polymerized by heat to the desired viscosity prior to frothing. A third technique which has been successful is to mix the monomers with a thixotropic agent such as fumed silica, carrying out the entire polymerization in a single in situ step after coating.

If the monomer mixture has been photopolymerized to provide a froth of coatable viscosity, it may contain sufficient residual initiator to allow the coated froth to be fully polymerized under ultraviolet radiation. However, it is usually desirable to add further photoinitiator which may also be capable of crosslinking the polymer. If the monomers are partially polymerized thermally and the polymerization is to be completed in situ by heat, it is usually necessary to add additional heat-activatable polymerization initiator to the partially polymerized composition.

To increase the cohesive strength of the acrylic foam, the polymerizable composition preferably includes a cross-linking agent. Useful crosslinking agents which also function as photopolymerization initiators are disclosed in U.S. Pat. Nos. 4,330,590 (Vesley) and 4,329,384 (Vesley, Moon). Other suitable crosslinking agents include polyacrylicfunctional monomers such a trimethylolpropane triacrylate and 1,2-ethylene glycol diacrylate.

Alternatively, an acrylic foam may be obtained by including hollow particles i.e., hollow microspheres into a polymerizable composition for making the acrylic polymer. Examples of hollow microspheres include expanded or expandable thermoplastic polymer microspheres and glass microbubbles. Examples of expanded or expandable thermoplastic polymer microspheres are disclosed in US Patent No. 4,855,170 and include the commercially available hollow polymeric microspheres from Pierce & Stevens Company under the tradename MICROLITE™ and MIRALITE™. Further commercially available expanded or expandable polymeric microspheres include EXPANCEL™ (Kema Nord Plastics) and MICROPEARL™ (Matsomoto Yushi Seiyaku). The hollow thermoplastic polymer microspheres typically have an average diameter of 5 to 150 microns, preferably 10 to 100 microns.

Suitable glass microbubbles preferably have an average diameter of 10-200 micrometers. Microbubbles of smaller average diameter would tend to be unduly expensive, whereas it would be difficult to coat out a polymerizable mixture containing microbubbles of larger average diameter. Preferably the average diameter of the microbubbles is within the range of 20 to 80 micrometers. The glass microbubbles typically have a specific gravity of less than 1.

While in a particular embodiment of this invention, the use of an acrylic foam layer is described, it is also contemplated to use foam layers based on other polymers including for example foams based on polyurethane, polyvinylchloride, polyethylene, ethylenevinylacetate or neoprene.

Examples of fibrous layers include non-woven fibrous layers commercially available from 3M Company under the brand THINSULATE™.

Still further, the further functional layer may be a further thermoformable polymer sheet that is provided with a metal layer such as an aluminum layer, in particular a vapor deposited aluminum layer that may be used as a heat shield in particular a shield that reflects heat.

The thickness of a further functional layer may vary widely and will generally depend on its desired functionality. Typically, the further functional layer may have a thickness between 0.1 mm and 5 mm or between 0.2 mm and 1.5 mm. The functional layer is typically a continuous layer but depending on the particular purpose may also be provided in a discontinuous way.

In accordance with the method of the present invention, a thermoformable polymeric sheet is printed on at least one major side with an ink composition. Suitable printing techniques include flexographic printing, pad printing of tampo-printing, screen printing and digital printing including for example inkjet printing. A typically preferred method is screen printing.

Screen printing is essentially a stencil printing process which may now be generated by computer with the aid of various software packages. Its ability to vary and control ink thickness accurately has made it an extremely useful process for the decoration of many different types of plastic substrates.

In screen printing, as disclosed for example in US Patent No. 6,465,102, a screen or stencil is prepared and bonded to a fine weave fabric which is then tensioned in a rigid frame. The basic screen-printing process involves, for example, the use of a flat bed where generally the substrate is held by vacuum during printing.

The printing step of the method may be repeated one or more times as needed, one for each color, depending on the number of desired color combinations to be printed on the decorated surface of the final article to obtain a desired full color decorated surface. It can be desirable to limit the number of times the printing step of the method is repeated, where the printed images at least overlap one on top of the other, in order to avoid interlayer adhesion problems resulting from image stacks that are too thick. It may be desirable to limit such printed image stacks to 5 or 6 layers (i.e., 5 or 6 printing steps) for the same decorative part.

Further, in order to obtain a desired design on the ultimate 3D part, it will generally be necessary to adjust for image deformation occurring when going from an image on the flat surface of the printed sheet to the image on the surface of the 3D formed part. This can be readily done with the aid of commercially available software such as the Rhino 4.0 Non-Uniform Rational B-Splines (NURBS) software which calculates the image to be printed on the flat thermoformable sheet to obtain an image as desired on the surface of the 3D formed part. The image may be printed on the backside of the sheet, i.e. the side opposite the side facing a viewer and/or on the front side. When the image is printed on the backside it will generally be printed in reverse.

Thermoformable polymeric sheets useful for receiving ink during the printing step according to the method of the present invention include transparent and non-transparent (opaque) thermoformable polymeric sheets. Transparent sheets may be clear transparent but it is also contemplated to use translucent sheets including colored translucent sheets. The thermoformable polymeric sheet may be comprised of polymer materials such as, for example, polycarbonate, polyesters, polyacrylates, polystyrene, polyethyleneterephthalate glycol (PETG), acrylonitrile butadiene styrene (ABS), thermoplastic polyolefin (TPO), polypropylene, acrylic compounds, and mixtures thereof. Due to superior mechanical and thermal properties, polycarbonate is preferred in the manufacturing of numerous part and components in the automotive industry. However, any other suitable thermoformable polymeric sheet may be used. The substrate may be a single layer structure or a multilayered structure, for example a multilayer co-extruded plastic substrate.

Specific examples of polycarbonate materials that can be used for the thermoformable polymeric sheet include, but are not limited to: Makrolon® polycarbonate sheets, available from Bayer AG (Darmstadt, Germany). It can be particularly desirable (e.g., for Automotive applications) to use polycarbonate or other thermoformable polymeric sheets that have been adapted to be resistant against degradation caused by ultraviolet (UV) radiation such as, for example, Makrofol® TP244, Makrolon® 1099UV or GE Lexan SLX, available from General Electric Corporation. When an ink image is printed on the backside of a transparent polymeric sheet, the top surface (i.e., opposite to the printed ink) can be UV protected.

Protecting against UV radiation can significantly improve the durability of the printed ink image and the thermoformable plastic sheet.

The thermoformable polymeric sheet typically will have a thickness between 0.1 and 10 mm, for example between 0.2 and 8mm or between 0.25 and 5mm.

The ink composition for use in the printing of the thermoformable polymeric sheet will vary depending on the particular printing technique used. Typically the ink composition will contain dyes and/or pigments that are dissolved or dispersed in a liquid. In a particular embodiment, the ink composition may contain metal particles including for example aluminium particles. In a further embodiment, the ink composition may contain pearlescent pigments. The liquid may comprise organic solvents or may be an aqueous medium. Typically a solvent based ink composition will be used. The ink composition preferably provides an ink coating that has sufficient elongation characteristics such that complex 3D shapes with sharp drawing angles can be produced without the risk of displeasing cracks or other similar defects occurring in the ink printed design. Accordingly, the ink composition will typically include one or more resins or alternatively components that upon activation, for example by heating, produce a resinous coating. Typically it will be desired that the printed sheet can be elongated by at least 100% or at least 200 % or at least 300% without or without substantial defects occurring in the printing as evaluated according to DIN EN ISO 4628/2003. Particular artefacts or defects that may occur on elongation of the printed sheet in the thermoforming and that are evaluated according to the aforementioned standard include: Cracking (physical cracks or crazing of the ink coating), pin holes (voids in the ink coating), striations (line defects in the direction of elongation), loss of opacity (due to thinning), colour change (due to thinning).

In a particular embodiment of the present invention, screen printing is used to print the ink composition. In one embodiment, the ink composition suitable for use in screen printing includes one or more organic solvents and one or more resins. Suitable resins include polyester-based resins, polycarbonate-based resins, polyvinyl chloride-based resins, acrylic-based resins, polycaprolactones or similar. Mixtures of synthetic resins can be advantageously employed. The resins may or may not have reactive groups for optional reaction with other components in the composition, for example isocyanate reactive groups for reaction with an isocyanate component in the composition.

Suitable solvents or solvent blends for use with the ink composition include those selected from ketones, such as, for example, cyclohexanone, isophorone, diacetone alcohol, acetophenone, di-isobutyl ketone; esters, such as for example, methoxypropyl acetate, isopropoxyethyl acetate, diethylene glycol ethyl ether acetate, ethylene glycol butyl ether acetate, ethoxyethyl propionate, ethyl lactate, isopropoxyethyl acetate, ethoxypropyl acetate, dimethyl succinate, dimethyl glutarate, dimethyl adipate, butoxyethyl acetate; and amides, such as for example, N-methylpyrrolidone. A mixture of these solvents may also be used.

In a particular embodiment, the solvent used is cyclohexanone. In particular, it is believed that the use of cyclohexanone as a solvent and the use of the polycarbonate as thermoformable polymeric sheet has the advantage to greatly improve the penetration into the thermoformable polymeric sheet of the ink material containing the ink composition and the solvent in which the ink composition is soluble.

In a particular aspect of the embodiment of screen printing, the ink composition includes a curable composition. A suitable curable composition comprises a polyisocyanate and a compound having isocyanate reactive groups. Suitable isocyanate reactive groups include hydroxyl groups and amino groups. In one embodiment of the invention, the compound having isocyanate reactive groups is a polymeric compound (e.g., a polymeric polyol). Generally, the compound having isocyanate reactive groups comprises at least two, generally at least three isocyanate reactive groups. Examples of compounds having isocyanate reactive groups include polyols, in particular acrylic or methacrylic homo- or copolymers having hydroxyl groups, for example having at least three hydroxyl groups. Further suitable isocyanate reactive compounds include polyolefins having isocyanate reactive groups, polyesters having isocyanate groups, polyurethanes having isocyanate reactive groups etc... In a particular embodiment in connection with the present invention, the curable composition includes a caprolactone or caprolactone polyol (i.e., polycaprolactone) having isocyanate reactive groups, in particular having two or three hydroxy groups. More particularly, the curable composition can include a polyester polyol, derived from caprolactone monomer, terminated by primary hydroxyl groups. The molecular weight of the isocyanate reactive compound may vary widely and can be between 500 g/mol and 500,000 g/mol, for example between 1000 g/mol and 100,000 g/mol or between 10,000g/mol and 80,000 g/mol. Simple low molecular weight compounds may be used as well such as for example alkane diols and alkane triols such as for example glycerol, butane diol and the like. The properties of the ink composition can be tailored by altering the molecular weight and/or the functionality of the curable composition.

The total amount of isocyanate reactive compounds in the ink composition is typically between 1 and 20% by weight based on the total amount of solids in the ink composition. A typical amount is generally between 2 and 15% by weight or between 3 and 10% by weight. Generally, the higher the amount of isocyanate reactive compounds for the same ratio of isocyanate to isocyanate reactive compounds, the less flexible the resulting cured ink may become, although the kind and nature of the polyisocyanate and isocyanate reactive compounds may influence the resulting flexibility as well.

The polyisocyanate used in the curable composition can be aliphatic or aromatic. Generally the polyisocyanate compound is a di-isocyanate or tri-isocyanate. Polymeric or oligomeric isocyanate containing compounds may be used as well. Mixtures of different polyisocyanate compounds can be used as well. When a mixture of polyisocyanate compounds is used, the average amount of isocyanate groups per molecule will be more than 2 for example at least 2.2 or at least 2.5. Specific examples include toluene-diisocyanate, toluene-triisocyanate, 2,6-toluene diisocyanate, diphenylmethane diisocyanate, isophorone-diisocyanate, hexamethylene diisocyanate, xylene diisocyanate, among others. The amount of polyisocyanate compounds in the curable composition is typically such that at least a stoichiometric amount and preferably an excess of isocyanate groups to isocyanate reactive groups in the composition is present. However it is also possible to use less than a stoichiometric amount.

In a particular aspect of the invention, the ink composition may contain metallic pigments and/or mica. In a particular embodiment, the ink composition comprises a lactone or polylactone compound that may or may not have isocyanate reactive groups. The lactone or polylactone compounds suitable for use in accordance with the present invention advantageously has from about 3 to about 20 carbon atoms. Examples of suitable lactones include caprolactone, t-butyl caprolactone, zeta-enantholactone; delta-valerolactones; monoalkyl-delta-valerolactones, such as the monomethyl-, monoethyl-, and monohexyl-delta-valerolactones, and the like; monoalkyl, dialkyl, and trialkyl-epsilon-caprolactones such as the monomethyl-, monoethyl-, monohexyl-, dimethyl-, di-n-hexyl, trimethyl-, triethyl-epsilon-caprolactones, 5-nonyl-oxepan-2-one, 4,4,6- or 4,6,6-trimethyl-oxepan-2-one and the like; 5-hydroxymethyl-oxepan-2-one; beta-lactones, for example, beta-propiolactone; beta-butyrolactone or pivalolactone; gamma-lactones, such as gamma-butyrolactone; dilactones, such as lactide; dilactides; glycolides, such as tetramethyl glycolides, and the like; dioxanones, such as 1,4-dioxan-2-one, 1,5-dioxepan-2-one, and the like. The lactones can be the optically pure isomers or two or more optically different isomers or other mixtures. Epsilon-caprolactone and its derivatives, for example, methyl-epsilon-caprolactone, and other seven membered ring lactones are especially preferred.

The following components may also be added to the ink composition: matting agents, surfactants, stabilizers, plasticizers, extenders, biocides, and similar.

The total amount of solids in the ink composition may vary widely but is generally between 15% by weight and 60% by weight, for example between 20% by weight and 45% by weight or between 22 and 40% by weight.

The ink composition is printed on one or both sides of the thermoformable polymer sheet but is typically printed on at least the back side of the thermoformable sheet, i.e. the side opposite to the side that will define the exterior surface of the decorative part and that faces an observer. Accordingly, if the decoration involves an image, the image would be printed in reverse. The decoration may also be a simple uniform color layer in which case reverse printing would obviously not be relevant. Printing on the backside is particularly advantageous when the article is to be used in an exterior application. An ink composition may also printed on the side that forms the exterior surface of the decorative part and the ink coating would thus be exposed on the surface of the decorative apart. In such a case, it will generally be advantageous to apply a clear coat on top of printed ink layer(s). Such a clear coat would serve as a protective layer (e.g., to provide abrasion resistance) and would typically be based on a curable composition, for example similar to the curable composition described above. Generally, the clear coat may be applied by screen printing as well, for example as a final printing after all ink layers have been printed. The clear coat may also be provided as a continuous layer overlaying printed as well as non-printed layers. Printing on both sides allows for obtaining special graphical effects that may desired in a particular application such as, for example, an image or graphic including glossy printing overlaid with matte printing designs.

When the ink composition contains a curable composition as described above or in case a curable composition for a protective layer is printed, the method would also include a curing step. Such a curing step, typically involves a cross-linking reaction of the crosslinking components, for example a polyisocyanate and a compound having isocyanate reactive groups. Typically, the curing is heat activated, for example, by irradiation of the printed sheet with infrared light. A catalyst for accelerating the curing of the curable composition may also be used in the ink composition such that less energy will be required to activate the cross-linking reaction.

Typically, a curing step involves heat activation to a temperature of up to 90°C, up to 120°C or even more, depending on the materials chosen. It can be desirable for the curing step to involve heat activation to a temperature of, for example, from 30°C to 80°C or from 40°C to 60°C. Varying temperature profiles may be used to cause curing. Also, generally heat activation should proceed for a time sufficient to obtain a desired level of curing such that a subsequent color can be printed without blending the different colors together. Depending on the ink composition, this time can be between for example 0.5 and 5 minutes. Further, subsequent of the printing of the different colors, a further heat activation may be employed to fully cure the curable composition in the ink composition(s). Generally, this further heat activation will take at least 30 minutes, for example at least one hour and may be up to several hours. A full cure may also take several days (e.g., 3 days). Also, a higher temperature may be used in this further heat activation and curing.

Following printing and as appropriate and necessary following curing, the printed sheets are subjected to thermoforming.

The thermoforming step is generally performed by inserting the ink printed sheets into a thermoforming machine and then heating them by infrared or other radiant heat source to soften the polymeric sheet, with the temperature and time of the heating operation dependent upon the type of thermoforming polymeric sheet. The ink printed sheets are inserted in the thermoforming machine and therein maintained in a fixed position, for example by clamping them, in order to allow a uniform thermoforming step.

Typically, the printed sheets are heated to a temperature between 100 and 200°C, for example between 130°C and 180°C or between 140°C and 170°C. Typically they are heated for a period of 1s to 3min., for example for 2s to 2 min.. Following this heating, the sheet is typically sufficiently soft for it to be formed into a desired shape by pressing a mold against it.

Thus, when the sheet is sufficiently soft, a mold may be pressed into the printed side (or optionally into the unprinted side) of the sheet and, due to the flexibility that the sheet is obtained in consequence of the thermoforming step, the sheet is allowed to tightly wrap the mold form, taking on its shape permanently. In a particular embodiment, the sheet is pressed between a male and female component of a mold. Vacuum is generally applied to allow the sheet to better wrap the mold.

In a particular embodiment, a negative pressure is applied to one side of the softened sheet, followed by application of a positive pressure from the same side and then pressing the mold against the sheet from the side where the positive pressure has been applied and then finally applying vacuum so the sheet wraps tightly around the mold.

After the sheet has obtained its shape, cooling air is conveniently applied to harden the sheet and to allow it to reach a solid shape. The thermoformed sheet is then removed from the thermoforming machine and may be subj ected to the final finishing step by cutting it, for example by a die-cutting device, to give it the final shape.

The mold for use in the method of the present invention may be a part that is to be decorated with the thermoformed printed sheet. In this case, removal of the thermoformed sheet from the mold may not be required. Nevertheless, removal may still be desirable to re-use the part as a mold for making further decorative articles. Typically, the mold can be made in an inexpensive way through machining of a suitable material such as resin or metal such as aluminium, brass or magnesium. In particular, the mold may be formed using CNC milling techniques that use CAD data to describe the desired 3D-geometry to form the desired article. The CNC machine may be so-called 3 axis vertical milling machines or so-called 5 axis milling machines.

In an embodiment of the present invention, it may be desired that the adhesive layer in the thermoformed article has a structured surface comprising microchannels defining between them raised areas. Such a thermoformed article can be obtained by providing the mold for forming the article with a patterned surface of ridges. These ridges will then form the microchannels in the adhesive layer when the mold is pressed against the printed polymeric sheet from the side comprising the thermoformable adhesive. While it may not be required, it will generally be desirable to provide a thermoformable release liner on the adhesive layer and hence, the pattern will also be formed in the release liner. Further if the release liner is removed following thermoforming with a mold having on its surface a pattern of ridges defining between them lower areas, the release liner will show on the side that contacted the adhesive a structured surface that is similar to that contained on the mold.

The pattern of ridges on the mold surface may define any pattern including for example a pattern where the ridges are along one direction and are parallel to each other along the orthogonal direction and are spaced apart at a constant distance, a pattern whereby a series of parallel ridges along one direction is intersected with a series of parallel ridges along another direction, for example a direction perpendicular. In the latter case, the pattern would define a series of discrete lower parts surrounded and separated from each other by the ridges. The corresponding pattern hereof in the adhesive would be a pattern of interconnected microchannels defining between them discrete raised areas.

The dimensions and shape of the ridges as well as their distance from each other (i.e. between them) will be selected such as to generate a desired pattern in the adhesive. Typically it will be desired that the microchannels have a depth of 3 to 150 microns, for example between 5 and 50 microns or between 30 and 100 microns. Typically the width of the microchannels (measured near the top of the channel) may be between 100 and 400 microns, for example between 200 and 300 microns. The frequency of microchannels measured as the number of channels per unit of length may be between 4 and 50 or between 4 and 20, for example between 6 and 16 or 8 and 12. In the case of intersecting microchannels, the distance between them may be different in one direction from the other. In other words, the areas defined between the microchannels may be generally square or rectangular. Depending on how the microchannels intersect, the areas between them can also have other shapes such as hexagonal. The shape of the microchannels may vary widely and may be regular or irregular including concave and V-shaped microchannels.

The invention is further illustrated with reference to the following examples without however the intention to limit the invention thereto.

### EXAMPLES

### MATERIALS for the Ink Composition of Examples 1 and 2

**D7900:** Clear base ink for preparing desired colored inks commercially available from 3M Company. The clear base ink is based on a PVC resin and acrylic resin and containing a solvent mixture of cyclohexanone, aromatic solvents and ethylene glycol butyl ether acetate. **P1**: colored pigment dispersion commercially available from Kiian S.P.A. Luisago, Italy with trade name Mankounian -Argon Thermoplus 49.000 series and intended for blending with D7900 clear resin.
**Joncryl(tm) 587:** acrylic polyol commercially available from Johnson (Johnson Polymer LLC, Sturtevant, WI 53177-0902, USA).
**TONE(tm) 200:** polycaprolactone diol commercially available from Dow (Dow, Midland, Michigan 48674, USA).
**HMDI:** hexamethylene di-isocyanate, Desmodur(tm) N 3390 BA/SN, commercially available from Bayer (Bayer Material Science AG, 51368 Leverkusen, Germany).
**Desmophen A450M PA/X:** acrylic polyol available from Bayer (Bayer Material Science AG, 51368 Leverkusen, Germany).
**CGS 80:** thinner commercially available from 3M Company.

The ink composition of Example 1, according to the invention, was prepared having the following composition:
a) 30 parts per weight D 7900 clear resin;
b) 60 parts per weight of a pigment dispersion P1;
c) 0.83 parts by weight Joncryl(tm) 587;
d) 0.41 parts by weight of TONE(tm) 200;
e) 0.0002 parts by weight dibutyltindilaurate;
f) 0.4 parts by weight HMDI;
g) 0.46 parts by weight Desmophen A450M PA/X
h) 0.00035 parts by weight Zinc napthenate
i) 0.000029 parts by weight Dimethyl polysiloxane
j) 5.7 parts by weight CGS 80.

The ink composition of Example 2, according to the invention, was prepared similar as the ink composition of Example 1.

### Preparation of screen printed polymeric sheets for Examples 1 and 2

Two sheets of a clear polycarbonate Makrofol^{™} (available from Bayer AG, Germany) having once a thickness of 3 mm for example 1 and 0.8mm for example 2 were screen-printed, using a commercially available flat-bed screen-printer. In order to obtain the desired design on the ultimate 3D part a NURBS (Non-Uniform Rational B-Splines) software was used known as Rhino V 4.0 commercially available by Filou Software GmbH, Rheda-Wiedenbrück, Germany.
The screen-printing took place in two steps using the prior described ink composition.

The printed samples were dried in a flat bed oven having four stations. This drying step was done after each color printing. The samples passed through the heating zones at a line speed of 5.5 m per minute. Total oven length was about 5.5 m. Temperature of the four heating zones were as follows: zone 1: 50 °C, zone 2: 60 °C, zones 3 and 4 room temperature ventilation, maximum temperature 35 °C. After the second printing and drying cycle the obtained printed samples were cured at 60 °C for 2h. The dried ink coating had a thickness of ca. 6 to 10 µm

### Lamination of an adhesive layer and foam layer upon the screen printed polymeric sheet

An Acrylic Foam Tape (GT 6008 commercially available by 3M Deutschland GmbH, Neuss, Germany) having a thickness of 0.8 mm was used. For Example 1 a rotary die-cut part of the Acrylic Foam Tape having a dimension of 15cm x 3.5 cm was laminated upon the surface of the screen-printed side of the polycarbonate sheet. The lamination was done using a 3 kg hand roller with one pass in each direction.

For example 2 a rotary die-cut part having the identical dimension as the door handle was applied upon the screen-printed side of the polycarbonate sheet. The so obtained printed polycarbonate sheets comprising an acrylic foam layer where then submitted to the thermoforming step.

### Preparation of the Male Mold

Based on CAD data describing the 3D geometry of a desired shape of an article to be formed, an aluminium male mold was machined out using CNC milling techniques.

For example 2 no male mold needed to be prepared. An injection molded door handle made from a thermoplastic ABS/PC blended resin was used directly as the part to be decorated.

### Thermoforming Step

In case of example 1 the release liner covering the adhesive layer opposite of the screen-printed surface of the polycarbonate sheet of example 1 was left in place prior to the thermoforming step. In case of example 2, the release liner opposite the screen-printed surface of the polycarbonate sheet was removed, in order to allow the acrylic foam adhesive layer to directly attach the door handle wrapping to the door handle itself during the thermoforming step.

For example 1 the printed sheet as obtained previously was applied to a Cannon vacuum thermoformer model number Forma^{™} 1200 (Corso Novara 179 - 27029 Vigevano (PV) - Italy), in such a way that the printed area covered by the adhesive layer was facing the male mold. The male mold is the downside part of the thermoforming equipment. When the sheet became flexible, the vacuum led to a wrap-up of the sheet around the outside of a male mold.

The temperature of the polycarbonate's thermoforming process was around 178°C (following ISO 360 method B50) for example 1 and the temperature was held for 1 min. The thermoformed sample was then separated from the mold. The final form of the sample was achieved by cutting.

For example 2 the printed sheet as obtained previously was applied to a Cannon vacuum thermoformer model number Forma™ 1200 (Corso Novara 179 - 27029 Vigevano (PV) - Italy), in such a way that the printed area was facing the injection molded ABS/PC door handle to be decorated. The temperature of the polycarbonate's thermoforming process was around 145°C (following ISO 360 method B50) and the temperature held for 1 min until the sheet became flexible. The flexible, printed sheet was then pressed against the door handle while applying vacuum, the exposed adhesive layer facing the door handle, thereto allowing the printed sheet to wrap around the door handle and be securely bonded by the adhesive layer.

### Visual inspection of examples 1-2

Three visual inspections of examples 1 & 2 were performed.

The resulting decorative polycarbonate parts of example 1 and 2 were first visually inspected for cracks in the printed ink layer. No cracks were found in the printed image.

Further the decorative parts of the examples 1 and 2 were attached to a part to be decorated. The decorated part was then inspected visually for separation between the decorative article, adhesive layer and the part. These visual inspections were done initially as well as after climate cycling at the following conditions:
4h in climate chamber at 80°C +/-2°C
4h in climate chamber at 40°C +/-2°C with humidity controlled at greater 90%
16h in climate chamber at minus 40°C +/-2°C
No detachment, deformation, shrinking or coloring was detected after 5 cycles at each of the above conditions.

## Claims

1. A method of forming an article comprising:
(a) printing an ink composition on at least one major surface of a thermoformable polymeric sheet;
(b) applying a thermoformable adhesive layer on at least one major surface to the thermoformable polymeric sheet thereby obtaining a printed sheet having a thermoformable adhesive layer; and
(c) thermoforming the printed sheet having said thermoformable adhesive layer.

2. A method according to claim 1 wherein said thermoformable adhesive layer is applied to one major surface of said thermoformable polymeric sheet and the ink composition is printed to the major surface opposite to the major surface to which said thermoformable adhesive is applied.

3. A method according to claim 1 wherein said thermoformable adhesive layer is applied over the printed ink composition.

4. A method according to any of the previous claims wherein said adhesive layer is applied in a discontinuous way.

5. A method according to claim 1 wherein said thermoformable adhesive layer is protected with a thermoformable release liner.

6. A method according to any of the previous claims wherein said thermoformable adhesive layer comprises a pressure sensitive adhesive.

7. A method according to any of the previous claims wherein said thermoformable adhesive layer comprises a heat activatable adhesive layer.

8. A method according to any of claims 1 to 4 wherein said thermoformable adhesive layer is bonded to a further layer.

9. A method according to claim 8 wherein said further layer is a sound or heat insulating layer or a vibration dampening layer.

10. A method according to claim 8 wherein said further layer is a polymeric foam layer or a woven or non-woven fibrous layer.

11. A method according to any of claims 8 to 10 wherein a further thermoformable adhesive layer is provided on said further layer.

12. A method according to any of the previous claims wherein said ink composition is printed by screen printing.

13. A method according to any of the previous claims wherein said ink composition comprises a resin selected from the group consisting of polyvinyl chloride, acrylic resin and combinations thereof.

14. A method according to any of the previous claims wherein said ink composition comprises a curable composition of a component having isocyanate reactive groups and a polyisocyanate.

15. A method according to any of the previous claims wherein said thermoforming of said printed sheet comprises:
(i) providing a mold having a desired shape and size to form an article of a desired shape and size;
(ii) heating the printed sheet;
(iii) pressing the mold against the printed sheet and applying vacuum thereto to allow the printed sheet to wrap around the mold; and
(iv) removing the printed sheet from the mold.

16. A method according to claim 15 wherein the surface of said mold is provided with a pattern of ridges and wherein said mold is pressed against said printed sheet from the side comprising the thermoformable adhesive layer thereby forming a corresponding pattern of microchannels in said adhesive layer.

17. A method according to claim 15 or 16 wherein said mold has the shape and size of a part of a vehicle to be decorated with the article to be formed.

18. A method according to claim 17 wherein said part of said vehicle is selected from a fuel tank, side mirrors, pillars and window supports.

19. A method according to any of the previous claims wherein said printing comprises the printing of an image.

20. A method according to claim 19 wherein said thermoformable polymeric sheet is transparent and wherein said image is reverse printed.

21. A thermoformed article obtainable by the method of any of claims 1 to 20.

22. A thermoformed article having a printed ink composition and an adhesive layer having a structured surface comprising microchannels defining between them raised areas.
